# EUROPEAN PATENT APPLICATION

(11) **EP 1 372 298 A1**
(43) Date of publication of application: **17.12.2003**
(21) Application number: 03101673.6
(22) Date of filing: 10.06.2003
(51) Int. Cl.: H04L 12/28, H04L 29/12

(54) **Method of transferring user data of a data transmission device of a wireless local area network, and wireless local area network system**

(30) Priority: 14.06.2002 FI 20021161
(71) Applicant: TeliaSonera Finland Oyj, 00510 Helsinki (FI)
(72) Inventor: Ala-Luukko, Sami, 00200 Helsinki (FI); Jokela, Harri, 00350 Helsinki (FI)
(74) Representative: Antila, Harri Jukka Tapani

(57) **Abstract**

The invention relates to a method of transferring user data of a roaming data transmission device of a wireless local area network between a visited network and a home network, and to a wireless local area network system. The method comprises establishing (202) a connection to the roaming data transmission device via a service access point of the visited network. The method further comprises: transferring (204) the user data of the data transmission device communicating with the service access point from an authentication server of the visited network to a user data server using an identification connection; identifying (206) the home network of the wireless data transmission device communicating with the service access point on the basis of the user data; retrieving address data of a second user data server from a domain name server connected to the user data server of the visited network on the basis of the user data for establishing the identification connection; establishing the identification connection from the first user data server to the second user data server connected to the home network via a service network connecting the first and second user data servers; and transferring (208) the user data by using the established identification connection to the authentication server of the home network.

## Description

### FIELD

The invention relates to a method of transferring user data of a roaming data transmission device of a wireless local area network between a visited network and a home network, and to a wireless local area network system.

### BACKGROUND

A wireless local area network generally refers to a local area network (LAN), wherein wireless connections instead of physical cables are used as the transmission path. In the present application, a wireless local area network is understood in its wide meaning, i.e. it refers to e.g. wireless local area networks according to IEEE (The Institute of Electrical and Electronics Engineers, Inc.) standards 802.11 or 802.11 b or to wireless data transmission systems implemented using radio transceivers according to a short-range, e.g. the Bluetooth® technology.

The focus in the application is particularly on wireless local area network systems composed of several wireless local area networks, enabling roaming between the different local area networks. Roaming refers to a function enabling the use of the services of the network in the user's current location area as the user and the wireless data transmission device move from one network to another. Roaming may take place for instance as the user moves from a home network (HN) administered by a domestic operator in his home country to a visited network (VN) administered by a foreign operator abroad or for instance when moving between networks administered by different operators located in the home country.

A significant prerequisite to implementing roaming is the authentication of the user of a wireless data transmission device. In authenticating a user in the authentication of wireless local area networks, for instance a user identifier-password pair can be used, which is transferred from the wireless data transmission device to the visited network and further to the home network.

In prior art solutions, direct point-to-point connections are used for roaming in wireless local area networks of different operators between wireless local area networks of the different operators. Typically, a data transmission connection using the Internet protocol (IP), e.g. the TCP/IP (Transmission Control Protocol / Internet Protocol), is established between the visited network and the home network, along which the user identifier-password pair used for authentication is transmitted. This is subject to new IP connections being built typically between the home network and the visited network that are networks of different network operators.

However, the drawback in prior art solutions is that point-to-point connections are laborious to maintain. Further problems are caused for instance by the different ways of implementing such connections, which further complicates maintenance. A further drawback is also that the networks are mutually poorly scalable.

### BRIEF DESCRIPTION

The object of the invention is to provide an improved method of transferring user data of a roaming data transmission device of a wireless local area network between a visited network and a home network, and an improved wireless local area network system.

An aspect of the invention provides a method of transferring user data of a roaming data transmission device of a wireless local area network between a visited network and a home network, the method comprising: establishing a connection to the roaming data transmission device via a service access point of the visited network; and transferring the user data of the data transmission device communicating with the service access point from an authentication server of the visited network to a user data server using an identification connection; identifying the home network of the wireless data transmission device communicating with the service access point on the basis of the user data; retrieving address data of a second user data server from a domain name server connected to the user data server of the visited network on the basis of the user data for establishing the identification connection; establishing the identification connection from the first user data server to the second user data server connected to the home network via a service network connecting the first and second user data servers; and transferring the user data by using the established identification connection to the authentication server of the home network.

An aspect of the invention provides a wireless local area network system comprising: at least two wireless local area networks, one of which is a home network and the other a visited network; and the home network comprising a home network authentication server and the visited network comprising a visited network authentication server, and the authentication server comprising user data of wireless data transmission devices of the local area network, and a visited network service access point connected to the visited network authentication server for establishing a connection to a roaming wireless data transmission device; and the system further comprising a user data server connectable by an identification connection to the visited network authentication server and a service network of a second user data server connected to the home network, the service network connecting the first user data server and the second user data server, and via which the identification connection is established from the first user data server to the second user data server, the user data server being configured: to identify the home network of the wireless data transmission device communicating with the service access point on the basis of the user data transferred by the authentication server to the user data server; to retrieve the address data of the second user data server from a domain name server connected to the user data server of the visited network on the basis of the user data for establishing the identification connection; and to transfer the user data by using the identification connection to the home network authentication server, which is configured to identify the home network of the wireless data transmission device communicating with the service access point on the basis of the user data transferred by the authentication server to the user data server; and to transfer the user data by using the identification connection to the home network authentication server.

Preferred embodiment of the invention are described in the dependent claims.

The invention is based on transferring, by using a user data server, the user data of a data transmission device of a wireless local area network roaming in a wireless local area network system between a visited network and a home network. The user data are transferred from the visited network by using an identification connection established via the user data server to the home network. The user data server intelligently studies who the user is and which the user's home network is, after which the user data server is able to transfer the user data to the correct address. The roaming data transmission device is authenticated on the basis of the transferred user data, after which the roaming data transmission device is able to use the services of the visited network.

The method and system of the invention bring about a plurality of advantages. A solution based on the use of a user data server provides a uniform hierarchy for implementing wireless local area network roaming, enabling the use of compatible solutions. A further advantage of the solution is that it only requires little maintenance. A significant advantage is also that the solution avoids building point-to-point connections between different operators, although they can also be used as part of the wireless local area network system, if desired.

A further advantage of the invention is that it can be applied to different types of business models: for example, it enables a user data server solution maintained by a commercial service provider or then the user data server may be maintained by a wireless local area network operator. Similarly, several wireless local area networks are able to use either a common user data server or each wireless local area network is able to use a special user data server. Various hybrids of these operations models are also feasible. Another advantage is that an operator of a wireless local area network is able to obtain all necessary services by establishing a client connection with only one user data server.

A further advantage of the solution is that it does not require any new or separate devices or solutions of the user or the user's data transmission device, and is compatible with techniques generally used by wireless local area network operators.

The solution is advantageous particularly when a considerable number of wireless local area network operators and providers of different types of roaming infrastructures belong to a wireless local area network system.

A further significant advantage of the solution is that it can also be used for transferring billing data from a visited network to the home network.

### LIST OF THE FIGURES

In the following, preferred embodiments of the invention will be described in detail with reference to the accompanying drawings, in which
Figure 1 is a simplified block diagram illustrating an example of a wireless local area network;
Figure 2 is a flow diagram illustrating a method of transferring user data of a roaming data transmission device of a wireless local area network between a visited network and a home network.

### DESCRIPTION OF THE EMBODIMENTS

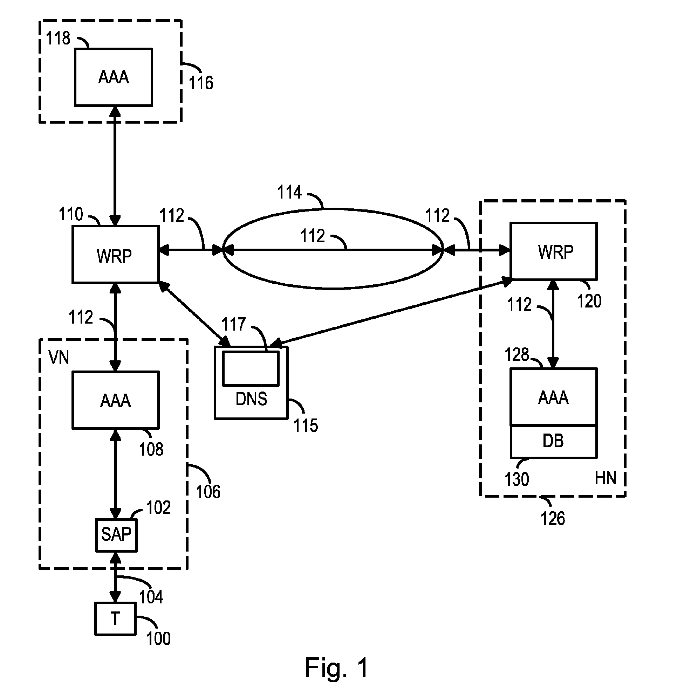

A simplified example of a wireless local area network system will be described with reference to Figure 1. The wireless local area network system comprises at least two wireless local area networks 106, 126, which in our example are wireless local area networks of different operators. However, the networks could also be two wireless local area networks maintained by the same operator in different countries, for example.

In the present context, a wireless local area network refers to a data transmission system using wireless connections as the transmission path by using for instance radio, microwave or infrared links instead of physical cables. The wireless local area network can be e.g. a wireless local area network according to IEEE standards 802.11 or 802. 11b, which can also be called a wireless Ethernet. To ensure the compatibility of devices according to standard 802.11, several companies together have founded a cooperation body called WECA (Wireless Ethernet Compatibility Alliance), which has registered the trademark WiFi® (Wireless Fidelity).

In the present context, a wireless local area network can also be a wireless data transmission system based on the use of short-range radio transceivers. The short-range radio transceiver can be for instance a radio transceiver according to the Bluetooth technology, comprising an integrated circuit manufactured in accordance with the technology. The use of Bluetooth enables the implementation of radio links having a frequency of 2.4 gigahertz and a range of a few hundreds of meters at most. However, a short-range radio transceiver can equally well be implemented by other known radio techniques enabling a two-way data transmission connection.

In our exemplary case, the wireless local area network system thus comprises at least two wireless local are networks 106, 126 of different operators, one of the networks being the home network 126 of a roaming wireless data transmission device 100, whose operator has given the user of the wireless data transmission device 100 access right to his network. The second wireless local area network 106, in turn, is a visited network 106 from the point of view of the roaming wireless data transmission device 100, the services provided by which the wireless data transmission device 100 wants to use.

The data transmission device 100 is capable of establishing a two-way data transmission connection 104 to the visited network 106 via a service access point 102 comprised thereby. The data transmission device 100 may be for instance a portable computer or a so-called handheld computer, i.e. a PDA (Personal Digital Assistant) or for instance a device of type Nokia® Communicator®. The data transmission device 100 can thus be equipped with a card implementing a wireless local area network or with a Bluetooth transceiver or some other technology enabling the implementation of two-way data transmission and roaming. The data transmission device 100, typically also comprising an antenna, a user interface and a battery, may be vehicle-mounted or portable, for example.

The visited network 106 comprises a service access point (SAP) 102, to which the data transmission device 100 is connectable using the connection 104. The service access point 102 constitutes a so-called access zone (also known as Hotspot) in an area where the users are provided with local area network connections. Such areas may include for instance offices, university campus areas, hotels or airports. The access zone may be used for instance to provide users of a portable computer with a fast wireless broadband service. The service access point 102 thus operates as a gate via which the data transmission terminal 100 is provided with data transmission services of the visited network 106.

In an embodiment, the service access point 102 is configured to use a wireless local area network according to standard 802.11 or 802.11b, i.e. a so-called wireless Ethernet to implement the connection 104 to the wireless data transmission device 100. In another embodiment, the service access point 102 is configured to use a short-range radio transceiver comprised thereby and a wireless local area network using it to implement the connection 104 to the wireless data transmission device. The radio transceiver may be implemented for instance by the Bluetooth technology. A significant advantage of both a wireless Ethernet and a short-range radio transceiver is that the frequency band specified for them is usually freely usable.

If the data transmission connection 104 is implemented by a wireless local area network of type wireless Ethernet, a service access point of the wireless Ethernet operating as a wireless Ethernet bridge to the local area network can be used as the service access point 102. In this case, the service access point 102 comprises a radio module for implementing radio links, and devices and software required for data encryption on the radio links.

The visited network comprises a visited network authentication server 108 and, similarly, the home network comprises a home network authentication server 128. The visited network authentication server 108 and the home network authentication server 128 can be an AAA server (Authentication, Authorization, and Accounting), which attends not only to user authentication, i.e. the confirmation of the user's claimed identity, but also to authorization and accounting for billing for the usage. In this case, the authentication server 108 may use the AAA protocol specified by the IETF (Internet Engineering Task Force), e.g. the Radius protocol (Remote Authentication Dial-in User Service, RADIUS) or the Diameter protocol.

An operator of a local area network typically maintains a database regarding roaming requests in the authentication server 108, 128. An operator of a wireless local area network can use authentication to deny roaming to unwanted users of data transmission devices or unwanted operators, i.e. operators with whom it has no roaming agreement, for example.

The wireless local area network system of our example comprises a user data server 110 connectable to the visited network authentication server 108 by using an identification connection 112. The user data server 110 serves to forward the authentication requests of the wireless data transmission device 100 communicating with the service access point 102 of the visited network from the authentication server 108 of the visited network 106 to the authentication server 128 of the home network 126. The authentication request includes user data of the roaming user, e.g. a user identifier-password pair.

Roaming is usually based on an inter-operator agreement, based on which at least two network operators give access to their uses to the services of either network 106, 126. When a user of the visited network 106, from whose point of view the visited network 106 is thus the home network, establishes a connection 104 to the service access point 102 of the visited network 106, the authentication server 108 can carry out the authentication locally having obtained the user's user data from the data transmission terminal 100 in association with login. However, the identification of a user of the visited network can be configured to take place also in the user data server 110. The user identifier can be e.g. a user identifier-password pair or SIM-based identification data, e.g. the international mobile subscriber identity of the wireless data transmission device and/or a realm appended thereto.

In our example, the user of the data transmission device 100 is not the user of the visited network 106, but a roaming user. In this case, the user data are transferred from the authentication server 108 of the visited network 106 to the user data server 110 by using the identification connection 112 and further to the authentication server 128 of the home network 126.

One or more other wireless local area networks 116 may also be connected to the user data server 110, and the user data server 110 is connectable to the authentication server 118 comprised by the wireless local area network 116.

The user data server 110, 120 serves to attend to the connections together with the other user data servers. To achieve this, it may for instance maintain a routing list of authentication server messages. In preferred embodiments, the wireless local area network of both the user data server and the operator use public IP addresses in applications concerning authentication servers, thereby avoiding the laborious maintenance of private IP addresses.

A second user data server 120 can be connected to the home network 126, more exactly to its authentication server 128, and a connection is established to said server from the user data server 110 connected to the visited network 106 by using the identification connection 112. The first user data server 106 and the second user data server 120 are connected to each other via a service network 114, via which the identification connection 112 for transferring the user data is established. The service network 114 can be for instance the Internet, a closed network or for example a virtual private network (VPM), which uses parts of public networks in creating the private network, or the sevice network may be for instance a GRX network (GPRS Roaming Network). The service network 114 may also comprise two interconnected service networks, such that one is for instance the Internet and the other a GRX network, or that both are similar, for instance closed networks. Thus the user data servers support several types of connections between the operators' local area networks and user data servers; instead of the former, for instance generally used Layer 2 types of connections may also be used.

The home network authentication server 128 typically comprises a database 130, in which access rights are specified. The visited network authentication server 108 also comprises a similar database. However, for the sake of clarity it is not shown in Figure 1, since the data required to authenticate a roaming data transmission terminal 100 are specified in the database 130 of the home network 106 authentication server 128.

Thus correct routing of a call is not required in the roaming function of the wireless local area network system described in our example, wherein only the data transmission connection 104 is to be established with the data transmission device 100 to the service access point 102 for instance to enable the retrieval of information from an Internet server. In our exemplary case, only user authentication is required, i.e. checking that the user has access right to said service access point 102 of the visited network 106. In our example, the access right is based on a contract being signed between the operator of the home network 126 and the operator of the visited network 106, giving the user of the home network 126 access right to the service access point 102 of the visited network 106.

The visited network 106 thus comprises a service access point 102 for establishing a connection 104 to the roaming wireless data transmission terminal 100, and an authentication server 108 connected to the service access point 102 for authenticating the user of the wireless data transmission terminal 100. The authentication server 108 is configured to transfer the user data of the user of the roaming wireless data transmission terminal 100 to the user data server 110 by using the identification connection 112. The home network 126 of the wireless data transmission device 100 communicating with the service access point 102 is identified in the user data server 110 on the basis of the user data. The user data are then transferred to the authentication server 128 of the home network 126 by using the identification connection 112.

The user data server 110 retrieves the address data of the home network of the wireless data transmission device 100 on the basis of the user data from a domain name server (DNS) 115 connected to the user data server 110. If the wireless local area network system comprises a second user data server 120 connected to the home network 126, the address data of the second user data server 120 are retrieved from the domain name server 115. The domain name server 115 may be physically located separate from the user data server 100, to which it is connected by a data transmission connection. The domain name server 115 may also be a device physically placed in the user data server 110, the device being connected to the user data server 115 by a data transmission connection. The domain name server 115 may also be implemented as a domain name server function in the same physical device as the user data server 110. In this case, it can be implemented for instance as a program module, whereby the connection can be implemented by using various normal inter-process functions, e.g. subprogram calls. The domain name server 115 typically comprises a mapping list 117 including information about the identifier of the service provider employed upon login, and the address data of the authentication server, typically an IP address. The domain name server function can thus be implemented as a mere mapping list 117 in each user data server 110, 120. The service provider identifier in the mapping list 117 can be e.g. an identifier NAI (Network Access Identifier) specified in accordance with the RFC 2486 (a document series concerning the Internet of the IETF, i.e. Internet Engineering Task Force). The domain name server 115 may also operate as a domain name server common to several user data servers, and it may also be a server maintained by a commercial service provider or one wireless local area network operator and selling services to other operators. Each wireless local area network operator may naturally have special domain name servers.

In the example of Figure 1, the network elements 102, 108 of the visited network 106 and the user data server 110 connectable to the authentication server 108 of the visited network 106 are interconnected by IP connections 112, and in the same way, the authentication server 128 of the home network and the second user data server 120 connectable thereto are interconnected by the IP connection 112. In the visited network 106 and/or the home network 126, any other known protocol suitable for the purpose can be used in traffic between the different elements and the user data servers 110, 120.

The user data of the user of the roaming data transmission terminal 100, for instance a user identifier-password pair, are thus transferred by using the identification connection 112 from the authentication server 108 of the visited network 106 via the user data server 110 to the authentication server 128 of the home network 126, wherein the actual authentication takes place.

In an embodiment, the user data are transferred from the user data server 110 by using the identification connection 112, established via the service network 114, to the second user data server 120 and further to the authentication server 128 of the home network 126.

An authentication response is transmitted in the reverse order by using the identification connection 112 from the authentication server 128 of the home network 126 to the user data server 110 and the authentication server 108 of the visited network 106. An authentication response includes information stating if the user of the data transmission terminal 100 has access right to the data transmission services provided by the visited network 106.

In an embodiment, the authentication response is transferred from the authentication server 128 of the home network 126 to the second user data server 120 and from there by using the identification communication 112 established via the service network 114 to the user data server 110 of the visited network 106 and further to the authentication server 108 of the visited network 106.

In an embodiment, the user data server 110 is configured to retrieve the address data of the home network 126 of the roaming wireless data transmission terminal 100 from the domain name server 115 connected to the user data server of the visited network 106 to establish the identification connection 112.

In another embodiment, the user data server 106 is configured to retrieve the address data of the second user data server 120 from the domain name server 115 connected to the user data server 110 of the visited network 106 on the basis of the user data to establish the identification connection 112.

In an embodiment, the user data server 110 is configured to relay billing information to the home network 126 about the connection 140 established on the basis of the user data between the wireless data transmission terminal 100 and the visited network 106 by using the identification connection 112.

The system comprises data transmission hardware for establishing the identification connection 112 between the user data server and wireless local area networks. In an embodiment, the system comprises data transmission equipment for establishing the identification connection 112 between the user data servers 110, 120 by using the service network 114.

The service access point 102, the authentication server 108, 128 and the user data server 110, 120 comprise data transmission hardware, with which said element communicates with other elements, and a control unit controlling the operation of the element, at present usually implemented as a processor and software. Other hardware implementations are also feasible, e.g. a circuit built from separate logics components or one or more application-specific integrated circuits (ASIC). The advantage of a software implementation is the facility of its maintenance: the above-described operation of the network elements is in this case implemented e.g. as program modules that can be updated more easily than a hardware solution. A hybrid of these different implementations is also feasible. When selecting the manner of implementation, a person skilled in the art takes into account e.g. the requirements set on the power consumption of the device, the required processing power, manufacturing costs, production volumes, and boundary conditions regarding updates and maintenance.

The above-described devices and units can be implemented as different configurations by implementing them either as separate or integrated devices. As was described above, for instance the domain name server 115 comprising the mapping list 117 can be placed separate from the user data server 110 or as a physical part or function thereof. Similarly, if the user data server 120 is part of the wireless local area network 126, maintained by an operator, the authentication server 128 and the user data server 120, for example, can be integrated into one device. In large networks, a single device or unit can be dedicated to given tasks only, whereas in small networks one element can attend to several separate tasks described in Figure 1.

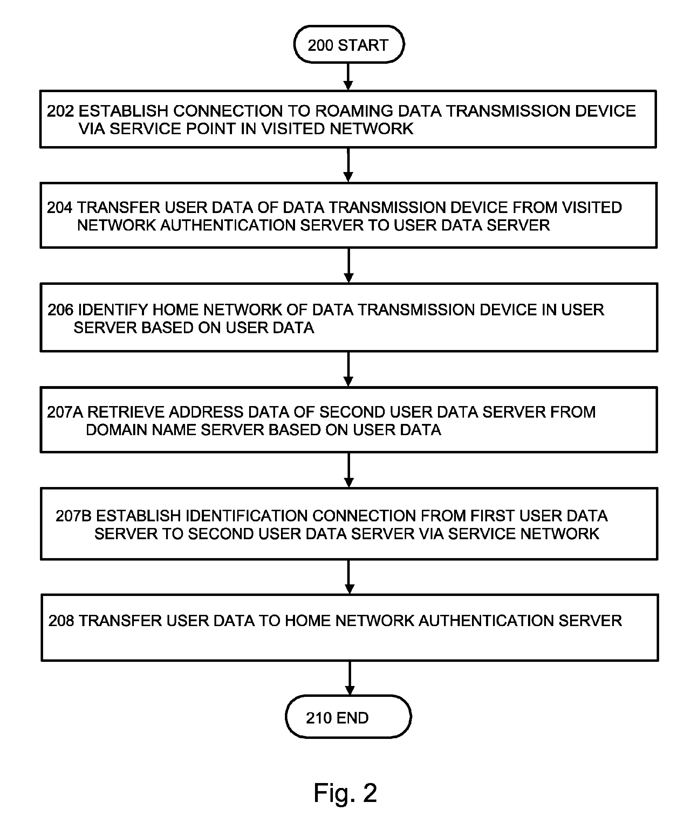

A method of transferring user data of a roaming data transmission device of a wireless local area network between a visited network and a home network will be described next with reference to the flow diagram of Figure 2.

The execution of the method starts at 200.

In 202, a connection is established to a roaming data transmission device via a service access point of a visited network. In the method, a connection can be established between the visited network and the wireless data transmission device by using a wireless local area network of type wireless Ethernet, or by using short-range radio transceivers according to the Bluetooth technology, for example, or by using some other technology suitable for the purpose. The user's user data are obtained in the visited network upon login. The user data can be a user identifier-password pair, for example.

Then, in 204, the user data of the data transmission device communicating with the service access point are transferred from the authentication server of the visited network to the user data server by using an identification connection.

In accordance with 206, the home network of the wireless data transmission device communicating with the service access point is identified in the user data server on the basis of the user data.

Finally, in 208, the user data are transferred by using the identification connection to the authentication server of the home network.

The execution of the method ends at 210.

In an embodiment of the method, billing data of the connection opened between the wireless data transmission device and the visited network can be transferred to the home network by using the identification connection.

In an embodiment, the address data of the home network of the roaming wireless data transmission device are retrieved from the domain name server for establishing the identification connection.

In an embodiment, an identification connection, established from a first user data server to a second user data server connected to the home network via a service network connecting the first and second user data servers, is used to transfer the user data to the authentication server of the home network.

The devices described above in association with Figure 1 can be used to implement the method, but other types of environments are also feasible.

Although the invention is described above with reference to the example according to the attached drawings, it is apparent that the invention is not limited thereto, but can be modified in a plurality of ways within the inventive idea disclosed in the appended claims.

## Claims

1. A method of transferring user data of a roaming data transmission device of a wireless local area network between a visited network and a home network, the method comprising:
establishing (202) a connection to the roaming data transmission device via a service access point of the visited network,
**characterized by** further comprising:
transferring (204) the user data of the data transmission device communicating with the service access point from an authentication server of the visited network to a user data server using an identification connection;
identifying (206) the home network of the wireless data transmission device communicating with the service access point on the basis of the user data;
retrieving (207A) address data of a second user data server from a domain name server connected to the user data server of the visited network on the basis of the user data for establishing the identification connection;
establishing (207B) the identification connection from the first user data server to the second user data server connected to the home network via a service network connecting the first and second user data servers; and
transferring (208) the user data by using the established identification connection to the authentication server of the home network.

2. A method as claimed in claim 1, **characterized by** retrieving the address data of the home network on the basis of the user data from the domain name server connected to the user data server of the visited network to establish the identification connection.

3. A method as claimed in claim 1, **characterized by** the user data server being maintained by a commercial service provider.

4. A method as claimed in claim 1, **characterized by** the user data server being maintained by an operator of a wireless local area network.

5. A method as claimed in claim 1, **characterized by** the user data transferred by the user data server being a user identifier-password pair of the data transmission device.

6. A method as claimed in claim 1, **characterized by** the user data transferred by the user data server being SIM-based identification data of the wireless data transmission device.

7. A method as claimed in claim 1, **characterized by** the user data transferred by the user data server being the international mobile subscriber identity of the wireless data transmission device; and/or a realm appended thereto.

8. A method as claimed in claim 1, **characterized by** the user data server being configured to transfer an authentication accept or reject message based on the user data of the wireless data transmission device from the authentication server of the home network to the authentication server of the visited network.

9. A method as claimed in claim 1, **characterized by** further comprising the steps of: transferring billing data of the connection opened on the basis of the user data between the wireless data transmission device and the visited network to the home network by using the identification connection.

10. A method as claimed in claim 1, **characterized by** the service network being the Internet.

11. A method as claimed in claim 1, **characterized by** the service network being a closed network.

12. A method as claimed in claim 1, **characterized by** the service network being a GRX network (GPRS Roaming Network).

13. A wireless local area network system comprising:
at least two wireless local area networks (106, 126), one of which is a home network (126) and the other a visited network (106); and the home network (126) comprising a home network authentication server (128) and the visited network comprising a visited network authentication server (108), and the authentication server (108, 128) comprising user data of wireless data transmission devices (100) of the local area network (106, 126),
and a visited network service access point (102) connected to the visited network authentication server (108) for establishing a connection to a roaming wireless data transmission device (100);
**characterized in that** the system further comprises:
a user data server (110) connectable by an identification connection (112) to the visited network authentication server (108) and a service network (114) of a second user data server (120) connected to the home network (126), the service network connecting the first user data server (110) and the second user data server (120), and via which the identification connection (112) is established from the first user data server (110) to the second user data server (120),
the user data server (110) being configured:
to identify the home network (126) of the wireless data transmission device (100) communicating with the service access point (102) on the basis of the user data transferred by the authentication server (108) to the user data server (110);
to retrieve the address data of the second user data server (120) from a domain name server (115) connected to the visited network user data server (110) on the basis of the user data for establishing the identification connection; and
to transfer the user data by using the identification connection (112) to the home network authentication server (128).

14. A system as claimed in claim 13, **characterized in that** for establishing the identification connection (112), the user data server (110) is configured to retrieve the address data of the home network (126) on the basis of the user data from the domain name server (115) connected to the user data server (108) of the visited network.

15. A system as claimed in claim 13, **characterized in that** the user data server (110, 120) is maintained by a commercial service provider.

16. A system as claimed in claim 13, **characterized in that** the user data server (110, 120) is maintained by an operator of a wireless local area network.

17. A system as claimed in claim 13, **characterized in that** the user data transferred by the user data server (110) is a user identifier-password pair of the data transmission device.

18. A system as claimed in claim 13, **characterized in that** the user data transferred by the user data server (110) is SIM-based identification data of the wireless data transmission device (100).

19. A system as claimed in claim 13, **characterized in that** the user data transferred by the user data server (110) is the international mobile subscriber identity of the wireless data transmission device (100), and/or a realm appended thereto.

20. A system as claimed in claim 13, **characterized in that** the user data server (110) is configured to transfer an authentication accept or reject message based on the user data of the wireless data transmission device (100) from the home network authentication server (128) to the visited network authentication server (108).

21. A system as claimed in claim 13, **characterized in that** the user data server (110) is configured to transfer billing data of the connection (104) opened on the basis of the user data between the wireless data transmission device (100) and the visited network (106) to the home network (126) by using the identification connection (112).

22. A system as claimed in claim 13, **characterized in that** the service network (114) is the Internet.

23. A system as claimed in claim 13, **characterized in that** the service network (114) is a closed network.

24. A system as claimed in claim 13, **characterized in that** the service network (114) is a GRX network (GPRS Roaming Network).

25. A system as claimed in claim 13, **characterized in that** the system comprises identification connection means (108, 110, 128) for establishing the identification connection (112) between the user data server (110) and a wireless local area network (106, 126) of at least two different operators.

26. A system as claimed in claim 13, **characterized in that** the system comprises identification connection means (110, 120) for establishing the identification connection (112) between the user data servers by using the service network (114).
